# EUROPÄISCHE PATENTANMELDUNG

(11) **EP 1 729 069 A1**
(43) Veröffentlichungstag der Anmeldung: **06.12.2006**
(21) Anmeldenummer: 05011671.4
(22) Anmeldetag: 31.05.2005
(51) Int. Cl.: F24D 13/02

(54) **Fussbodenaufbau mit einer elektrischen Fussbodenheizung und Heizmodul**

(71) Anmelder: Moletherm Holding AG, 4502 Solothurn (CH)
(72) Erfinder: Huber, Daniel, 1248 Hermance/Genf (CH)
(74) Vertreter: Neubauer, Hans-Jürgen

(57) **Zusammenfassung**

Die Erfindung betrifft einen Fußbodenaufbau mit einer elektrischen Fußbodenheizung, mit einer zwischen einem Rohboden (5) als unterster Schicht und einem Bodenbelag (20) als oberster Nutzschicht angeordneten Dämmschicht (6) und wenigstens einem elektrisch betreibbaren Heizelement (9). Erfindungsgemäß besteht die Dämmschicht (6) aus Dämmstoffplatten (2a-2h) und wenigstens einem Heizmodul (3a-3d), die aneinandergrenzen bodenflächendeckend ausgelegt sind, wobei das wenigstens eine Heizmodul (3a-3d) aus einer Basisdämmplatte (8a-8d) und mindestens einem darauf integriert angebrachten, im verlegten Zustand an der Oberseite liegenden Flächenheizelement (9a-9d) gebildet ist. Dadurch wird vorteilhaft eine einfach verlegbare dämmschichtintegrierte Fußbodenheizung mit gutem Wirkungsgrad herstellbar.

## Beschreibung

Die Erfindung betrifft einen Fußbodenaufbau mit einer elektrischen Fußbodenheizung und ein Heizmodul zur Herstellung eines solchen Fußbodenaufbaus.

Ein allgemein bekannter Fußbodenaufbau mit einer Fußbodenheizung besteht aus einem Rohboden als unterster Schicht und einem Bodenbelag als oberster Nutzschicht, wobei dazwischen eine Dämmschicht und Flächenheizelemente angeordnet sind.

Konkret liegt bei dem bekannten Fußbodenaufbau auf dem Rohboden eine Wärmedämmschicht auf der flächendeckend eine Spezialfolie verlegt ist. Hierauf wird eine Heizfolie ausgerollt und befestigt, die elektrisch betrieben wird und dazu eine leitfähige Widerstandsschicht enthält. Auf dieser Heizfolie ist zur Wärmespeicherung eine dicke Zement-Estrichschicht aufgebracht. Alternativ dazu kann für eine Wärmespeicherung als Estrich eine Schüttung aus phasenänderndem Material (PCM-Material) aufgebracht werden, die mit einem Trocken-Estrich abgedeckt ist. Dadurch ist gegenüber einer dicken Zement-Estrichschicht eine Reduzierung der Estrichdicke in Verbindung mit einer größeren Wärmespeicherfähigkeit erreichbar. Auf dem Estrich wird ein Bodenbelag angebracht.

Bei dem bekannten Fußbodenaufbau wird durch die Anordnung der Heizfolie unter einer solchen Estrichschicht primär diese Wärmespeicherschicht erwärmt, die die Wärme von der Heizfolie entsprechend ihrer Wärmespeicherkapazität und Wärmeleitfähigkeit aufnimmt und erst dann wieder an den Gebäudeinnenraum abgibt. Der Wirkungsgrad der Heizfolie ist dadurch bezüglich einer Wärmestrahlungsabgabe an den Gebäudeinnenraum stark reduziert. Eine solche Fußbodenspeicherheizung ist zudem regelungstechnisch sehr träge. Gewünschte Innenraumtemperaturänderungen oder eine Reaktion auf Außentemperaturänderungen sind mit einer entsprechenden Ansteuerung der Heizfolie erst nach relativ langen Zeiten zu erhalten.

Zudem ist der bekannte Fußbodenaufbau hinsichtlich der erforderlichen Materialien und des erforderlichen Montageaufwands kostenintensiv. Die Ausführung mit einer dicken Zement-Estrichschicht erfordert einen Nasseinbau als aufwendigen schwimmenden Estrich mit langen Austrocknungszeiten. Die Ausführungsform mit einer Schüttung aus PCM-Granulat ist hinsichtlich des Materials in der Montage ebenfalls aufwendig. Zudem ist die Heizfolie als separate Schicht auf der Wärmedämmung bzw. auf eine Spezialfolie durch Auslegen und Fixieren unter Herstellung elektrischer Verbindungen anzubringen. Dieser eigene diffiziele Montageschritt ist im rauhen Baubetrieb nur schwierig und mit der Gefahr von Montageschäden an den Heizfolien durchführbar.

Weiter sind Flächenheizelemente als Wandheizelemente bekannt (EP 1 135 970 B1), bei denen zwischen zwei beabstandeten elektrischen Leitern eine Beschichtung aus einem Beschichtungsmaterial angebracht ist, das eine elektromagnetische Strahlung im Infrarotbereich, speziell im nicht sichtbaren Infrarotbereich abstrahlt. Das hier verwendete Beschichtungsmaterial enthält insbesondere bestimmte Stoffmengenanteile von Graphit und von einem isolierenden Ruß sowie weitere Bestandteile. Die elektrischen Leiter zu den Heizelementen sind mit einem Steuergerät verbunden, welches insbesondere die Energie für eine Anregung der Beschichtung für die elektrische Abstrahlung liefert. Die strahlungsaktive Beschichtung ist auf einem nicht leitenden Material angebracht. Die Verkabelung verläuft individuell konzipiert auf der Wandfläche direkt zwischen den Flächenheizelementen und dem Steuergerät.

Aufgabe der Erfindung ist es, einen Fußbodenaufbau mit einer elektrischen Fußbodenheizung vorzuschlagen, der demgegenüber einfacher montierbar ist und bei hohem Wirkungsgrad ein weniger träges Heizungssteuerverhalten aufweist.

Diese Aufgabe wird mit den Merkmalen des Anspruchs 1 gelöst.

Eine weitere Aufgabe der Erfindung ist es, ein Heizmodul vorzuschlagen, mit dem ein solcher Fußbodenaufbau herstellbar ist. Diese Aufgabe wird mit den Merkmalen des Anspruchs 16 gelöst.

Gemäß Anspruch 1 besteht beim erfindungsgemäßen Fußbodenaufbau die Dämmschicht aus Dämmstoffplatten und wenigstens einem Heizmodul, die aneinandergrenzend bodenflächendeckend ausgelegt sind, wobei das wenigstens eine Heizmodul aus einer Basisdämmplatte und mindestens einem darauf integriert angebrachten im verlegten Zustand an der Oberseite liegenden Flächenheizelement gebildet ist.

Bei der Verlegung der Dämmschicht wird in einem Arbeitsgang nach einem vorher erstellten individuellen Verlegeplan bereits die Verlegung der dämmschichtintegrierten Flächenheizelemente mit durchgeführt. Neben der Einsparung von Montagevorgängen gegenüber Einzelverlegungen ist die Gefahr von Montagefehlern oder Beschädigungen bei der Montage stark reduziert.

Vorteilhaft wird damit eine dämmschichtintegrierte Fußbodenheizung vorgeschlagen, wodurch insgesamt die Verlegung des Fußbodenaufbaus vereinfacht wird und kostengünstig ist. Da auf einen wärmespeichernden, dicken Estrich verzichtet wird, kann für einen hohen Wirkungsgrad die Wärmestrahlungsabgabe der Flächenheizelemente wesentlich besser genutzt werden. Durch diese unmittelbare Wärmeabstrahlung der Flächenheizelemente in den Innenraum ist zudem eine schnell ansprechende Heizungssteuerung/Heizungsregelung möglich, die entsprechend schnell auf Änderungen in den Temperaturrandbedingungen reagieren kann.

Nach Anspruch 2 haben die Dämmstoffplatten ohne Flächenheizelemente die gleiche Schichtdicke wie die Heizmodule. Dies wird dadurch erreicht, dass die Flächenheizelemente sehr dünn im Vergleich zu den Schichtdicken sind, so dass die Schichtdicke der Dämmstoffplatten und der Basisdämmplatten praktisch gleich sein können und nach der Auslegung des Fußbodens eine durchgehende Ebene aus Dämmstoffplatten und Heizmodulen für die Anbringung eines Bodenbelags zur Verfügung steht. Auch beim vorliegenden Fußbodenaufbau können je nach den Gegebenheiten übliche Schichtdicken von wenigen bis mehreren Zentimetern verwendet werden.

Zur Erleichterung der Verlegearbeiten sind die Dämmstoffplatten und die Heizmodule Rechteckflächen gleicher Breite, die einfach bahnenförmig kombinierbar sind, wobei Bahnenteile aus Heizmodulen durch entsprechend abgelängte Dämmstoffplattenteile zu kompletten Bahnen einfach ergänzt werden.

Die Dämmstoffplatten und die Basisdämmplatten der Heizmodule sollen nach Anspruch 4 die Funktion einer Wärmedämmung und/oder Trittschalldämmung aufweisen. Zur Herstellung solcher Platten sind eine Vielzahl von Dämmstoffen bekannt, die je nach den aktuellen Gegebenheiten einsetzbar sind. Insbesondere können anorganische Dämmstoffe als porige Dämmstoffe oder faserige Dämmstoffe, wie Glas- oder Steinwolle in Form von dimensionsstabilen, flexiblen Matten und Filzen oder stabilen Platten verwendet werden, die eine gute Wärme- und Trittschalldämmung aufweisen. Alternativ dazu sind auch organische Dämmstoffe als porige Dämmstoffe, wie z. B. Polystyrol-Hartschaum (PS) oder Polyurethan-Hartschaum (PUR) sowie faserige Dämmstoffe, insbesondere poröse Platten aus Holzfasern oder Betumenkorkfilz möglich.

Um eine besonders gute Wärmedämmung und Trittschalldämmung in einer einzigen Dämmschicht integriert zusammen mit der Fußbodenheizung zu erhalten, können bevorzugt auch Matten, Filze, Platten aus einem Materialverbund unterschiedlicher Dämmstoffmaterialien oder unterschiedlicher Materialdichten verwendet werden.

Je nach Konsistenz der Dämmstoffplatten und/oder der Heizmodule können diese nach Anspruch 5 plattenförmig stabil oder dimensionsstabil flexibel, insbesondere aufrollbar ausgebildet sein, wobei gegebenenfalls mehrere Heizmodule zusammenhängend gebildet sein können, aus denen individuell vorgegebene Länge ablängbar sind.

Zweckmäßig werden in an sich bekannter Weise nach Anspruch 6 zwischen dem Rohboden und der Dämmschicht und/oder zwischen der Dämmschicht mit den Heizmodulen und der darüberliegenden Nutzschicht jeweils eine flächendeckende Abdeckfolie als Feuchtesperre, beispielsweise als Polyethylenfolien, angebracht.

Mit Anspruch 7 wird vorgeschlagen, dass auch elektrische Anschlussleitungen als flache Leitungsstreifen heizmodulintegriert auf der Basisdämmplatte angebracht und dort bis in einen Seitenrandbereich geführt sind. Dort können, ohne nach oben die Schichtdicke zu vergrößern, mit an sich bekannten Verbindungstechniken weitere Anschlusskabel angeschlossen werden, die nach Anspruch 8 bevorzugt durch die Anlagespalte hindurch nach unten unter den angrenzenden Dämmstoffplatten weiter geführt sind. Dies ergibt insgesamt eine einfache Verlegung dergestalt, dass nach einem individuellen Verlegeplan zuerst die Heizmodule ausgelegt und verkabelt werden. Anschließend wird die übrige Bodenfläche mit den bereits verlegten Kabeln mit Dämmstoffplatten ausgelegt, wodurch eine durchgehende Oberflächenebene für den weiteren Bodenaufbau erhalten wird. Diese Vorgehensweise führt zu einer einfachen, schnellen und sicheren Montage.

Nach Anspruch 9 weist das wenigstens eine Flächenheizelement eine dünnwandige Beschichtung als aktive Strahlungsheizungsbeschichtung auf, die je nach verwendetem Dämmstoffmaterial unmittelbar auf einer Basisdämmplatte aufgebracht sein kann. Falls das Dämmstoffmaterial für eine unmittelbare Aufbringung nicht geeignet ist, kann die Beschichtung über eine mit der Basisdämmplatte verbundene Zwischenfolie erfolgen. Auf einer solchen Beschichtung wird vorzugsweise eine weitere Abdeckfolie als mechanische Schutzfolie und/oder als elektrische Isolierfolie angebracht.

In einer konkreten Ausführungsform nach Anspruch 10 sind die flachen Leitungsstreifen, vorzugsweise Kupferstreifen parallel verlaufend über gegenüberliegende Randbereiche der Strahlungsheizungsbeschichtung geführt und mit dieser elektrisch verbunden. Die Leitungsstreifen sind weiter bis zu einem Seitenrand, bei einer bahnförmigen Verlegung bis zu einem Bahnbreitenrand geführt, wo dann der elektrische weitere Kabelanschluss vorgenommen werden kann. Zweckmäßig werden nach Anspruch 11 die Leitungsstreifen parallel über die gesamte Länge der Basisdämmplatte, d. h. bis zu beiden Bahnbreitenrändern geführt, wodurch Freiräume für die weitere Kabelverlegung geschaffen sind.

Nach Anspruch 12 soll das Heizmodul mit einer Kaschierfolie und/oder Papierbahn überzogen sein, auf der das darunterliegende Flächenmuster aus dem/den Flächenheizelementen und den Leitungsstreifen durch einen Aufdruck ersichtlich ist, zusammen mit einem Warnhinweis, dass die darunterliegenden Flächenheizelemente und Leitungsstreifen, insbesondere durch Nageln oder Schrauben nicht beschädigt werden dürfen. Eine solche Warnfunktion kann alternativ auch auf der vorstehend erwähnten Schutz-/Isolierfolie aufgebracht sein.

Bevorzugt werden nach Anspruch 13 Flächenheizelemente als infrarotstrahlende Strahlungsheizelemente verwendet, die mit einer Niedervoltspannung unter 50 Volt betreibbar sind. Es hat sich gezeigt, dass der Wirkungsgrad solcher Strahlungsheizelemente besonders hoch ist, wenn diese ohne wärmespeichernde Estrichschicht möglichst unmittelbar unter dem Bodenbelag angebracht sind, wie dies beim erfindungsgemäßen Fußbodenaufbau der Fall ist. Grundsätzlich sind solche Strahlungsheizelemente auch für den Betrieb mit einer höheren Netzspannung bekannt, der vorgeschlagene Niedervoltspannungsbetrieb mit Spannungen unter 50 Volt ist jedoch insbesondere bei einem Fußbodenaufbau ein vorteilhafter Sicherheitsaspekt.

Zur Ausbildung einer Heizungsregelung soll das Steuergerät nach Anspruch 14 mit einem Raumluft-Temperatursensor und/oder einem in den Fußbodenaufbau integrierten Boden-Temperatursensor verbunden werden. Über die Erfassung der Raumlufttemperatur kann eine übliche Heizungsregelung über einen Soll-Istwertvergleich durchgeführt werden. Alternativ oder gleichzeitig kann in die Regelung auch die aktuelle Bodentemperatur mit einbezogen werden. Insbesondere kann die Bodentemperatur auf einen vorgegebenen Maximalwert überwacht werden, wobei die zugeordneten Flächenheizelemente vor Erreichen des Maximalwerts schnell abgeregelt werden können.

Für den Bodenbelag als oberste Nutzschicht können beim erfindungsgemäßen Fußbodenaufbau im Prinzip alle bekannten Beläge, beispielsweise aus Holz, Textilien, Fliesen oder Kunststoff verwendet werden. Bei weniger stabilen Bodenbelägen, wie beispielsweise einem Teppichboden, kann es erforderlich sein, zwischen der Dämmschicht und dem Bodenbelag eine Plattenschicht als Druckverteil- und/oder Trägerschicht anzubringen.

Hinsichtlich des Heizmoduls wird die Aufgabe der Erfindung, gemäß Anspruch 16 dadurch gelöst, dass das Heizmodul aus einer Basisdämmplatte und mindestens einem darauf integriert angebrachten, im verlegten Zustand an der Oberseite liegenden Flächenheizelement gebildet ist. Das integral auf das Heizmodul angebrachte Flächenheizelement ist dünn im Vergleich zur Schichtdicke der Basisdämmplatte, wobei die Basisdämmplatte die Funktion einer Wärmedämmung und/oder Trittschalldämmung aufweist und dazu aus anorganisch geblähten oder faserigen Dämmstoffen oder aus organischen porigen oder faserigen Dämmstoffen oder einem Verbund solcher Dämmstoffe besteht.

Damit wird ein Heizmodul mit dämmschichtintegrierten Flächenheizelementen vorgeschlagen, das hinsichtlich einer Heizungsprojektierung und einer Verlegung einfach zu handhaben ist und insbesondere auch von Laien im Do-ityourself-Verfahren verlegt werden kann.

Je nach den verwendeten Materialien für die Basisdämmplatte können nach Anspruch 17 die Heizmodule stabile Plattenformen aufweisen oder dimensionsstabil flexibel, insbesondere aufrollbar sein. Gegebenenfalls können aus zusammenhängenden Heizmodulteilen Einzelmodule auf vorgegebene Längen abgelängt werden.

Besonders vorteilhaft soll nach Anspruch 18 auch die elektrische Verbindung der Flächenheizelemente im Heizmodul integriert und dort für eine Weiterverkabelung in Seitenrandbereiche geführt sein.

Nach Anspruch 19 soll das Flächenheizelement eine dünnwandige infrarotstrahlende Strahlungsheizungsbeschichtung aufweisen, über die nach Anspruch 20 an gegenüberliegenden Randbereichen flache Leitungsstreifen geführt sind, wobei die Beschichtung und die Leitungsstreifen mit einer Schutz/lsolierfolie dauerhaft als Bestandteil des Heizmoduls abgedeckt sind.

In dieser Folie oder in einem zusätzlichen Überzug können nach Anspruch 21 Warnhinweise auf das darunterliegende Flächenmuster aus Heizelementen und Anschlussleitungen aufgenommen sein, mit dem Hinweis, dass dort nicht genagelt und nicht geschraubt werden darf, um Beschädigungen zu vermeiden.

Damit keine personenkritischen, elektrischen Spannungen auftreten können, wird mit Anspruch 22 ein Niedervoltspannungsbetrieb unter 50 Volt vorgeschlagen, wodurch die Installation und der Betrieb einer solchen Heizung sicher und einfach ist.

Anhand einer Zeichnung wird die Erfindung näher erläutert.

### Es zeigen:

- Fig. 1: eine Draufsicht auf einen Fußbodenaufbau in einem Gebäude-innenraum,
- Fig. 2: einen Schnitt entlang der Linie A-A aus Fig. 1 einer ersten Ausführungsform, und
- Fig. 3: einen Schnitt entlang der Linie A-A aus Fig. 1 einer zweiten Ausführungsform.

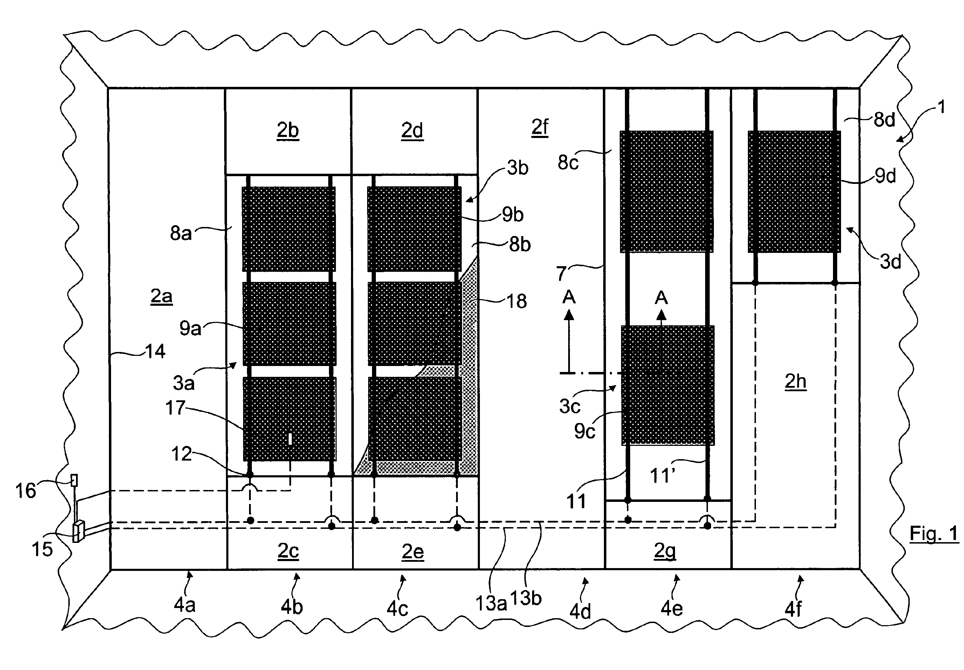

In Fig. 1 ist ein Fußbodenaufbau 1 mit einer elektrischen Fußbodenheizung in einer Draufsicht gezeigt, mit einer bereits fertiggestellten Verlegung einer Dämmschicht.

Diese Dämmschicht besteht aus Dämmstoffplatten 2a bis 2h und Heizmodulen 3a bis 3d, die in einer Draufsicht Rechteckflächen gleicher Breite aufweisen und aneinandergrenzend, bodenflächendeckend in nebeneinanderliegenden Bahnen 4a bis 4f verlegt sind. In den Bahnen 4a und 4d sind nur Dämmstoffplatten (ohne Flächenheizelemente) verwendet. In den Bahnen 4b und 4c sind nebeneinanderliegend die Heizmodule 3a und 3b verlegt, wobei durch entsprechend abgelängte Dämmstoffplattenteile 2b, 2c bzw. 2d, 2e die Bahnen komplettiert sind. In den Bahnen 4e und 4f liegend unterschiedlich lange Heizmodule 3c und 3d mit einer Breitseite an einer Raumkante an, wobei im übrigen die Bahnen durch Dämmstoffplattenteile 2g und 2h ergänzt sind.

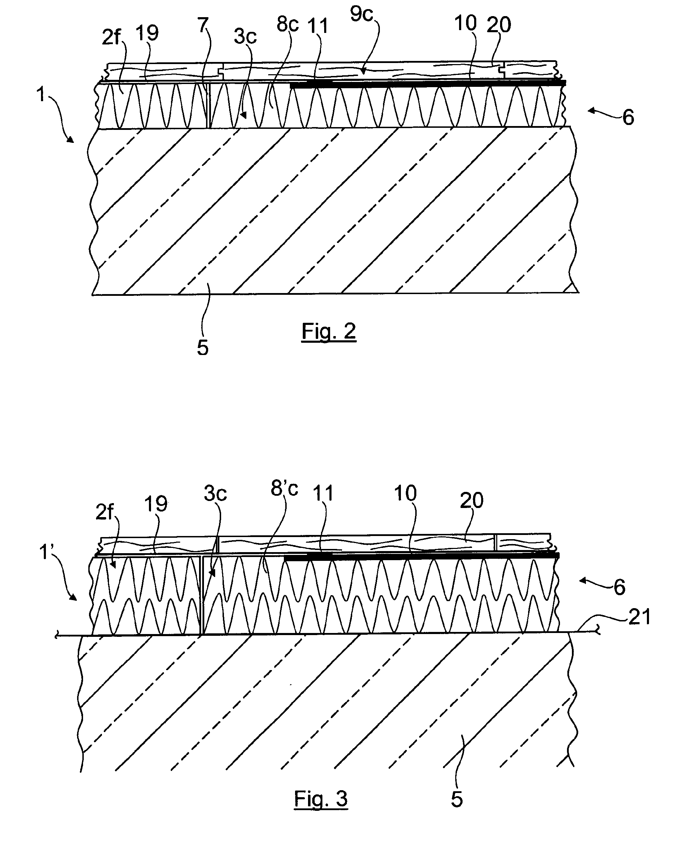

In Verbindung mit Fig. 2 ist erkennbar, dass auf einen Rohboden 5 beispielsweise auf eine Betondecke eine Dämmschicht 6 ausgelegt ist, die mit gleicher Schichtstärke aus den Dämmstoffplatten 2a bis 2h und aus Heizmodulen 3a bis 3d besteht, die jeweils an Stößen 7 aneinanderliegen.

Die Heizmodule 3a bis 3d bestehen jeweils aus einer Basisdämmplatte 8a bis 8d auf deren Oberseiten Flächenheizelemente 9a bis 9d fest integriert angebracht sind. Bei den Heizmodulen 3a und 3b sind jeweils drei in Längsrichtung beabstandete Flächenheizelemente 9a, 9b angebracht. Beim Heizmodul 3c sind dagegen zwei Flächenheizelemente 9c mit etwas größerer Längserstreckung und einem größeren Abstand angebracht und beim Heizmodul 3d ist nur ein Flächenheizelement 9d verwendet. Die Anordnung, Größe und Lage der Heizmodule und der Flächenheizelemente wird nach den jeweils erforderlichen Heizerfordernissen bestimmt und in einem Verlegeplan vorgegeben.

Ein Flächenheizelement 9a bis 9d besteht jeweils aus einer Strahlungsheizungsbeschichtung 10 eines infrarotstrahlenden Beschichtungsmaterials, vorzugsweise mit Stoffmengenanteilen von Graphit und isolierendem Ruß. Die Strahlungsheizungsbeschichtung 10 ist jeweils unmittelbar oder mittelbar über eine Zwischenfolie auf die darunterliegende Basisdämmplatte 8a bis 8d als deren integrierter Bestandteil aufgebracht.

Über gegenüberliegende Randbereiche der Strahlungsheizungsbeschichtungen 10 von zugeordneten Flächenheizelementen 9a bis 9d einer Bahn 4b, 4c, 4e, 4f verlaufen ebenfalls als Bestandteil der Heizmodule 3a bis 3d flache Leitungsstreifen 11, 11' als parallele Kupferstreifen jeweils bis zu einem Bahnbreitenrand. Dort sind jeweils an Anschlusspunkten 12, vorzugsweise über Steckverbindungen und/oder Climpverbindungen, Anschlusskabel 13a, 13b angeschlossen, wobei jeweils linksseitige Leitungsstreifen 11 mit dem Anschlusskabel 13b und rechtsseitige Leitungsstreifen 11' mit dem Anschlusskabel 13a verbunden sind. Von den Anschlusspunkten 12 aus verlaufen die Anschlusskabel 13a, 13b in den Stößen 7 jeweils unter den angrenzenden Dämmstoffplatten 2a bis 2h (strichliert gezeichnete Anschlusskabel 13a, 13b) bis zur Bodenseitenkante 14, von wo sie nach oben zu einem Steuergerät 15 geführt sind. Das Steuergerät 15 ist mit einem Raumlufttemperatursensor 16 und zudem mit einem Bodentemperatursensor 17 verbunden, der im Bereich eines Flächenheizelements 9a angebracht ist.

Auf den Heizmodulen 3a bis 3d und als deren Bestandteil ist jeweils eine Abdeckfolie 18 als mechanische Schutzfolie und elektrische Isolierfolie aufgebracht, die der Übersichtlichkeit wegen nur in Verbindung mit dem Heizmodul 3b teilweise dargestellt ist.

Zudem ist über der Dämmschicht 6 eine flächendeckende Trennfolie 19 angebracht (in Fig. 1 noch nicht verlegt). Auf dieser Trennfolie 19 ist gemäß Fig. 2 bei einem fertig verlegten Fußbodenaufbau 1 als Nutzschicht ein Bodenbelag 20 aus Holz, beispielsweise in der Art eines Fertigparkettbodens, verlegt.

Der alternative Fußbodenaufbau 1' nach Fig. 3 entspricht weitgehend dem Fußbodenaufbau 1 nach Fig. 2, so dass gleiche Aufbaubestandteile mit gleichen Bezugszeichen versehen sind. Die Unterschiede liegen darin, dass zwischen dem Rohboden 5 und der Dämmschicht 6 weiter eine Trennfolie 21 als Feuchtesperre verwendet ist. Die Basisdämmplatte 8'c besteht hier aus einem schichtweisen Materialverbund unterschiedlicher Dämmstoffe, was durch die unterschiedlichen Schraffuren angedeutet ist. Damit können gegebenenfalls in der Basisdämmplatte 8'c die beiden Funktionen, Trittschalldämmung und Wärmedämmung, durch Verwendung darauf speziell abgestimmter Materialien besser realisiert werden.

## Patentansprüche

1. Fußbodenaufbau mit einer elektrischen Fußbodenheizung,
mit einem Rohboden (5) als unterster Schicht und einem Bodenbelag (20) als oberster Nutzschicht, wobei dazwischen eine Dämmschicht (6) und wenigstens ein elektrisch betreibbares Flächenheizelement (9) angeordnet sind,
**dadurch gekennzeichnet,**
- **dass** die Dämmschicht (6) aus Dämmstoffplatten (2a-2h) und wenigstens einem Heizmodul (3a-3d) besteht, die aneinandergrenzend, bodenflächendeckend ausgelegt sind, wobei
- das wenigstens eine Heizmodul (3a-3d) aus einer Basisdämmplatte (8a-8d) und mindestens einem darauf integriert angebrachten, im verlegten Zustand an der Oberseite liegenden Flächenheizelement (9a-9d) gebildet ist.

2. Fußbodenaufbau nach Anspruch 1, **dadurch gekennzeichnet, dass** die Dämmstoffplatten (2a-2h) und das wenigstens eine Heizmodul (3a-3d) gleiche Schichtdicken haben, wobei das integral auf das Heizmodul aufgebrachte Flächenheizelement sehr dünn im Vergleich zu den Schichtdicken ist.

3. Fußbodenaufbau nach Anspruch 1 oder 2, **dadurch gekennzeichnet, dass** die Dämmstoffplatten (2a-2h) und das oder die Heizmodule (3a-3d) in einer Draufsicht Rechteckflächen gleicher Breite aufweisen und in nebeneinanderliegenden Bahnen (4a-4f) verlegt sind dergestalt,
dass Bahnen (4b, 4c, 4e, 4f) mit Heizmodulen (3a-3d) vorgegebener Länge durch entsprechend abgelängte Dämmstoffplatten (2b, 2c, 2d, 2e, 2g, 2h) zu einer jeweils kompletten Bahn (4b, 4c, 4e, 4f) ergänzt sind.

4. Fußbodenaufbau nach einem der Ansprüche 1 bis 3, **dadurch gekennzeichnet, dass** die Dämmstoffplatten (2a-2h) und eine oder mehrere Basisdämmplatten (8a-8d) die Funktion einer Wärmedämmung und/oder Trittschalldämmung aufweisen, und
dass die Dämmstoffplatten (2a-2h) und/oder die Basisdämmplatten (8a-8d) der Heizmodule (3a-3d) aus anorganischen geblähten oder faserigen Dämmstoffen oder aus organischen porigen oder faserigen Dämmstoffen oder einem Verbund solcher Dämmstoffe bestehen.

5. Fußbodenaufbau nach Anspruch 4, **dadurch gekennzeichnet, dass** die Dämmstoffplatten (2a-2h) und/oder die Heizmodule (3a-3d) plattenförmig stabil oder dimensionsstabil flexibel, insbesondere aufrollbar ausgebildet sind, wobei gegebenenfalls Heizmodule (3a-3d) daraus auf vorgegebene Längen ablängbar sind.

6. Fußbodenaufbau nach einem der Ansprüche 1 bis 5, **dadurch gekennzeichnet, dass** zwischen dem Rohboden (5) und der Dämmschicht (6) und/oder zwischen der Dämmschicht (6) und der Nutzschicht (20) eine flächendeckende Trennfolie (19, 21) als Feuchtesperre angebracht ist.

7. Fußbodenaufbau nach einem der Ansprüche 1 bis 6, **dadurch gekennzeichnet, dass** das mindestens eine Flächenheizelement (9a-9d) mit flachen Anschlussleitungen, insbesondere als Leitungsstreifen (11, 11'), verbunden ist, die als Bestandteil des Heizmoduls (3a-3d) auf der Basisdämmplatte (8a-8d) angebracht und dort bis in einen Seitenrandbereich geführt sind, und
dass dort über Steckverbindungen und/oder Klammerverbindungen und/oder Lötverbindungen Anschlusskabel (13a, 13b) zur Verbindung mit einem Steuergerät (15) für die Energieversorgung und Steuerung/Regelung des Flächenheizelements (9a-9d) angeschlossen sind.

8. Fußbodenaufbau nach Anspruch 7, **dadurch gekennzeichnet, dass** die Anschlusskabel (13a, 13b) unter den Dämmstoffplatten (2a-2h), vorzugsweise in einem Raumeckbereich, geführt sind.

9. Fußbodenaufbau nach einem der Ansprüche 1 bis 8, **dadurch gekennzeichnet, dass** das wenigstens eine Flächenheizelement (9a-9d) eine dünnwandige Beschichtung als aktive Strahlungsheizungsbeschichtung (10) aufweist, die unmittelbar auf die Basisdämmplatte (8a-8d) oder mittelbar über eine Zwischenfolie auf die Basisdämmplatte (8a-8d) aufgebracht ist und/oder über der Beschichtung und gegebenenfalls über flachen Leitungsstreifen (11, 11') eine weitere Abdeckfolie (18) angebracht ist, wobei die Abdeckfolie oder die Abdeckfolien die Funktion einer Schutzfolie und/oder einer Isolierfolie haben.

10. Fußbodenaufbau nach Anspruch 9, **dadurch gekennzeichnet, dass** über gegenüberliegende Randbereiche der Strahlungsheizungsbeschichtung (10) und mit dieser elektrisch verbunden jeweils flache Leitungsstreifen (11, 11') als Anschlussleitungen, vorzugsweise Kupferstreifen parallel verlaufen, die auf der Basisdämmplatte (8a-8d) und mit dieser verbunden jeweils bis zu deren Seitenrand, bei einer bahnförmigen Verlegung bis zu deren Bahnbreitenrand, geführt sind.

11. Fußbodenaufbau nach Anspruch 10, **dadurch gekennzeichnet, dass** bei einer bahnförmigen Verlegung in Bahnlängsrichtung wenigstens zwei beabstandete rechteckige Flächenheizelemente (9a, 9b, 9c) angeordnet sind und die parallel flachen Leitungsstreifen (11, 11') bis zu beiden gegenüberliegenden Bahnbreitenrändern der Basisdämmplatten (8a, 8b, 8c) verlaufen.

12. Fußbodenaufbau nach einem der Ansprüche 1 bis 11, **dadurch gekennzeichnet, dass** die Basisdämmplatte (8a-8d) und darauf in einem vorgegebenen Flächenmuster angebrachte Flächenheizelemente (9a-9d) und zugeordnete Leitungsstreifen (11, 11') unmittelbar oder mittelbar zumindest über dem Flächenmuster mit einer Kaschierfolie und/oder Papierbahn überzogen ist, und
dass das Flächenmuster auf der Folie und/oder auf der Papierbahn als Warnmuster sichtbar ausgebildet ist mit einem Warnhinweis, dass das hinter dem Flächenmuster liegende Flächenheizelement (9a-9d) und die Leitungsstreifen (11, 11') nicht beschädigt werden dürfen, insbesondere hier nicht genagelt und nicht geschraubt werden darf.

13. Fußbodenaufbau nach einem der Ansprüche 1 bis 12, **dadurch gekennzeichnet, dass** das wenigstens eine Flächenheizelement (9a-9d) ein infrarotstrahlendes Strahlungsheizelement ist, das mit einer Niedervoltspannung unter 50 Volt betreibbar ist.

14. Fußbodenaufbau nach einem der Ansprüche 1 bis 13, **dadurch gekennzeichnet, dass** für eine Heizungsregelung ein Steuergerät (15) mit einem Raumluft-Temperatursensor (16) und/oder mit einem im Fußbodenaufbau enthaltenen Boden-Temperatursensor (17) verbunden ist.

15. Fußbodenaufbau nach einem der Ansprüche 1 bis 4, **dadurch gekennzeichnet, dass** der Bodenbelag (20) aus Holzmaterial, Textilmaterial, Fliesenmaterial oder Kunststoffmaterial hergestellt ist und je nach den sich daraus ergebenden Erfordernissen gegebenenfalls darunter eine Plattenschicht als Druckverteil- und/oder Trägerschicht angebracht ist.

16. Heizmodul zur Herstellung eines Fußbodenaufbaus nach einem der Ansprüche 1 bis 15, **dadurch gekennzeichnet, dass** das Heizmodul (3a-3d) aus einer Basisdämmplatte (8a-8d) und mindestens einem darauf integriert angebrachten, im verlegten Zustand an der Oberseite liegenden, Flächenheizelement (9a-9d) gebildet ist,
dass das integral auf das Heizmodul (3a-3d) aufgebrachte Flächenheizelement (9a-9d) dünn im Vergleich zur Schichtdicke der Basisdämmplatte (8a-8d) ist,
dass die Basisdämmplatte (8a-8d) die Funktion einer Wärmedämmung und/oder Trittschalldämmung aufweist und diese aus anorganischen geblähten oder faserigen Dämmstoffen oder aus organischen porigen oder faserigen Dämmstoffen oder einem Verbund (8'c) solcher Dämmstoffe besteht.

17. Heizmodul nach Anspruch 16, **dadurch gekennzeichnet, dass** die Heizmodule (3a-3d) plattenförmig stabil oder dimensionsstabil flexibel, insbesondere aufrollbar ausgebildet sind, wobei gegebenenfalls Heizmodule (3a-3d) daraus auf vorgegebene Längen ablängbar sind.

18. Heizmodul nach Anspruch 16 oder 17, **dadurch gekennzeichnet, dass** das mindestens eine Flächenheizelement (9a-9d) mit flachen Anschlussleitungen, insbesondere als Leitungsstreifen (11, 11') verbunden ist, die als Bestandteil des Heizmoduls (3a-3d) auf der Basisdämmplatte (8a-8d) angebracht und dort bis in einen Seitenrandbereich geführt sind, und
dass dort an Anschlusspunkten (12) über Steckverbindungen und/oder Klemmverbindungen und/oder Lötverbindungen Anschlusskabel (13a, 13b) zur Verbindung mit einem Steuergerät (15) für die Energieversorgung und Steuerung/Regelung des Flächenheizelements (9a-9d) anschließbar sind.

19. Heizmodul nach einem der Ansprüche 16 bis 18, **dadurch gekennzeichnet, dass** das wenigstens eine Flächenheizelement (9a-9d) eine dünnwandige Beschichtung als aktive Strahlungsheizungsbeschichtung (10) aufweist, die unmittelbar oder mittelbar über eine Zwischenfolie auf die Basisdämmplatte (8a-8d) aufgebracht ist und/oder über der Beschichtung und gegebenenfalls über den flachen Leitungsstreifen (11, 11') eine weitere Abdeckfolie (18) als Bestandteil des Heizmoduls (3a-3d) angebracht ist.

20. Heizmodul nach Anspruch 19, **dadurch gekennzeichnet, dass** über gegenüberliegende Randbereiche einer oder mehrerer im Abstand angebrachter Strahlungsheizungsbeschichtungen (10) und mit diesen elektrisch verbunden jeweils flache Leitungsstreifen (11, 11') als Anschlussleitungen, vorzugsweise Kupferstreifen parallel verlaufen, die auf der Basisdämmplatte (8a-8d) und mit dieser verbunden jeweils bis zu einem Seitenrand geführt sind.

21. Heizmodul nach einem der Ansprüche 16 bis 20, **dadurch gekennzeichnet, dass** das auf den Basisdämmplatten (8a-8d) gebildete Flächenmuster aus den Flächenheizelementen (8a-8d) und den Leitungsstreifen (11, 11') mit einer Kaschierfolie und/oder Papierbahn überzogen ist, und
dass das Flächenmuster auf der Folie und/oder auf der Papierbahn als sichtbares Warnmuster ausgebildet ist mit einem Warnhinweis, dass die hinter dem Flächenmuster liegenden Flächenheizelemente (8a-8d) und Leitungsstreifen (11, 11') nicht beschädigt werden dürfen, insbesondere hier nicht genagelt und nicht geschraubt werden darf.

22. Heizmodul nach einem der Ansprüche 16 bis 21, **dadurch gekennzeichnet, dass** das wenigstens eine Flächenheizelement (9a-9d) ein infrarotstrahlendes Strahlungsheizelement ist, das mit einer Niedervoltspannung unter 50 Volt betreibbar ist.
